Europäisches Patentamt

(19) European Patent Office

Office européen des brevets

(11) **EP 0 725 388 A2**

(12) **EUROPEAN PATENT APPLICATION**

(43) Date of publication:
07.08.1996 Bulletin 1996/32

(51) Int. Cl.$^6$: **G11B 5/39**

(21) Application number: 96101123.6

(22) Date of filing: 26.01.1996

(84) Designated Contracting States:
DE FR GB

(30) Priority: 31.01.1995 JP 34319/95

(71) Applicant: SONY CORPORATION
Tokyo (JP)

(72) Inventors:
• Shibata, Takuji,
c/o Sony Corporation
Shingawa-ku, Tokyo (JP)

• Soda, Yutaka,
c/o Sony Corporation
Shinagawa-ku, Tokyo (JP)

(74) Representative: TER MEER - MÜLLER -
STEINMEISTER & PARTNER
Mauerkircherstrasse 45
81679 München (DE)

(54) **Magneto-resistance effect type magnetic head operable at optimum biasing point**

(57) A magnetic head operable at an optimum bias point, irrelevant to a film thickness of a magneto-resistance effect element (1). head, a first conductor (14) is series-connected to a magneto-resistance effect element, a bias field applying portion (14b) of the first conductor is arranged on the magneto-resistance effect element (1), a second conductor (15,21) is parallel-connected to the bias field applying portion, and a current (Is) is supplied to the first conductor, thereby applying a bias field to the magneto-resistance effect element.

FIG.6

FIG.5

Printed by Rank Xerox (UK) Business Services
2.13.0/3.4

## Description

BACKGROUND OF THE INVENTION

The present invention relates to a magneto-resistance effect type magnetic head constructed of a magnetic layer having a magneto-resistance effect whose resistivity is changed by a recording field exerted from a magnetic recording medium.

Recently, there is a trend in reducing design sizes of hard disk apparatuses and increasing memory capacities of these hard disk apparatuses. In particular, such a down-sizing need is made of storage devices of portable type computers, typically known as notebook type personal computers, for instance, 2.5-inch compact hard disk devices.

Since a recording medium speed is delayed in such a compact hard disk device, depending upon a diameter of the recording medium disk, when the conventional induction type magnetic head is employed whose reproduced output originally depends upon the recording medium speed in this compact hard disk device, the output reproduced from this induction type magnetic head would be lowered. Therefore, this difficulty would impede a need to increase the memory capacity in such a compact hard disk device.

To the contrary, a magneto-resistance effect type magnetic head (will be simply referred to as an "MR head" hereinafter) owns such a feature that an output reproduced from this MR head does not depend upon a recording medium speed, and also a high reproduced output can be obtained from the MR head even in a low recording medium speed. In such a magneto-resistance effect type magnetic head, a change in resistance values of a magnetic layer having the magneto-resistance effect whose resistivity is varied in response to a magnetic field is detected as an output voltage reproduced from this MR head. This magnetic layer will be simply referred to as an "MR element" hereinafter. Accordingly, the MR head could be expected as a magnetic head for a compact hard disk device with a large storage capacity.

This MR head corresponds to a reproducing magnetic head which utilizes a so-called "magneto-resistance effect phenomenon," namely an electric resistance value is changed based on an angle defined by a magnetizing direction of a transition metal and a direction of a current flowing in this transition metal. In other words, when the MR element receives a leakage flux produced from a magnetic recording medium, this leakage flux would rotate the magnetizing direction of the MR element, so that such an angle is defined in response to an amount of magnetization with respect to the direction of the current flowing into the MR element. As a result, the electric resistance value of the MR element is changed, and then a voltage change in response to this resistance change amount appears across both ends of the electrodes of the MR element through which the current flows. As a consequence, this voltage change is readable as a voltage signal corresponding to a magnetic recording signal.

The MR head is fabricated in such a manner that the MR element, a film electrode, an insulating layer and the like are formed in a film shape on a substrate by utilizing the thin-film technique, and then these components are etched to obtain a predetermined shape by utilizing the photolithographic technique. Also, the MR head employs such a shield structure that a lower magnetic pole and an upper magnetic pole, which function as shield members, are arranged at the lower and upper portions of this MR head in order that a gap length during signal reproducing operation is defined to prevent an unnecessary magnetic flux from being penetrated into the MR element.

Concretely speaking, in a so-termed "longitudinal (vertical) type MR head" in which a sense current flows in a direction perpendicular to a track width direction, an insulating layer, a soft magnetic film constituting the lower magnetic pole, and another insulating layer made of such a material of $Al_2O_3$ or $SiO_2$ are successively stacked on a non-magnetic substrate. An MR element is arranged over this insulating layer in such a manner that a longitudinal direction of this MR element is perpendicular to a surface opposite to a magnetic recording medium (namely, sliding surface of magnetic recording medium), and also one end surface thereof is exposed from the magnetic recording medium sliding surface. In addition, both of a front end electrode and a rear end electrode, which supply the sense current to this MR element, are provided on both end portions of the MR element, and another insulating layer element made of such a material as $Al_2O_3$ or $SiO_2$ is formed on this MR element. This insulating layer is sandwiched by the above-explained front end electrode and rear end electrode. A bias conductor is arranged on this insulating layer with being located opposite to the MR element. Furthermore, another insulating layer is fabricated on this bias conductor, and also a soft magnetic film constituting the upper magnetic pole is stacked on this insulating layer, so that the above-explained MR head is constructed.

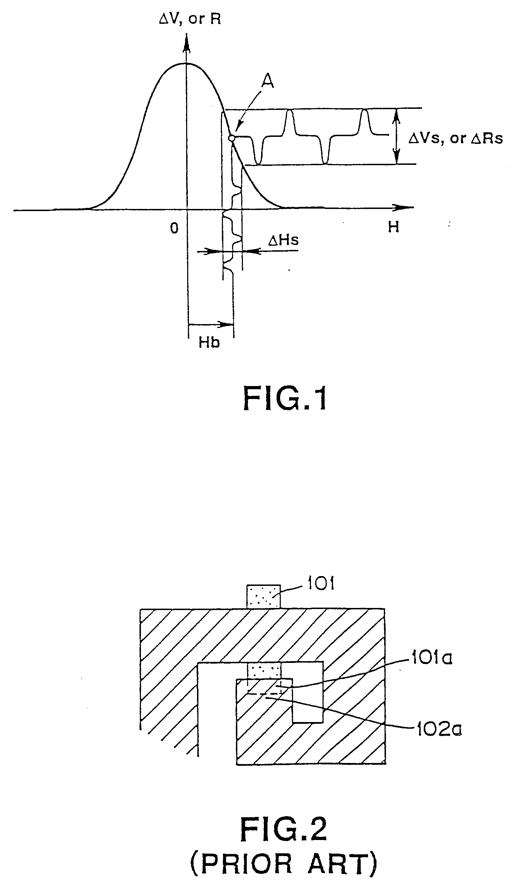

A description will now be made of the function of the above-explained MR element in the MR head. The electric resistance "R" of this MR element is varied in response to the intensity of the magnetic flux (magnetic flux amount) inputted into the MR element. That is, the external magnetic field dependency of the electric resistance R of the MR element is expressed as an MR characteristic by an MR curve shown in Fig. 1.

To drive the MR element, the bias current is first supplied to the bias conductor, so that a bias field Hb is previously applied to the MR element at a point where the MR element may have the better linearity with respect to the external field and also have the greatest change in the electric resistance R. This point is recognized as an operation point "A." At this time, when a signal field $\Delta Hs$ is entered from the magnetic recording member, this signal field $\Delta Hs$ is converted into a resist-

ance change $\Delta$Rs. In other words, while the sense current Is having a predetermined value is supplied to the MR element, this resistance change $\Delta$Rs may be derived as an output voltage $\Delta$Vs based upon the Ohm's law of $\Delta$Vs = $\Delta$Rs x Is .

Since the MR head owns the structure for sandwiching the MR element by the upper magnetic pole and the lower magnetic pole, the S/N (signal-to-noise ratio) of the reproduced output and the recording density of this MR head can be increased, as compared with those of the magnetic head without the upper and lower magnetic poles.

On the other hand, very recently, storage capacities of hard disk apparatuses are required to be further increased, and tracks of magnetic recording mediums are required to be further narrowed, so that higher recording density would be achieved. To increase the line recording density, such a magnetic recording medium having higher coercive force and lower residual magnetic flux density may be employed. However, when the tracks of this magnetic recording medium are narrowed, the output reproduced from the magnetic recording medium would be lowered. Also, when the coercive force is increased and the residual magnetic flux density is lowered, the S/N ratio would be degraded. As a consequence, such an MR head including a compact MR element with a thin film thickness and high current density has been proposed.

According to one example of the above-proposed MR head, the bias conductor and the rear end electrode are commonly used so as to reduce a total number of terminals. Concretely speaking, a vertical type MR head having such a structure is so arranged, as illustrated in Fig. 2, that a conductor 102 is provided, and one end portion 102a of this conductor 102 is series-connected to a rear end portion 101a of an MR element 101.

The above-explained conductor 102 is of a spiral bending shape, and a bias field applying portion 102b corresponding to one portion of this conductor 102 is positioned perpendicular to the hard magnetization axis direction (longitudinal direction) of the MR element 101. Since a current having a preselected value is supplied to this conductor 102, this current becomes a bias current which will then be supplied to the bias field applying portion 102b. As a result, a bias field is applied to the MR element 101 and this current becomes a sense current which will then be supplied from the rear end portion 101a to the MR element 101.

As described above, in such an MR head that the conductor 102 is series-connected to the MR element 101, the value of the bias current is continuously equal to the value of the sense current. As a result, to set the value of the employed sense current to the optimum value of the bias current, the structures of the MR element 101 and the conductor 102 should be designed under optimum conditions.

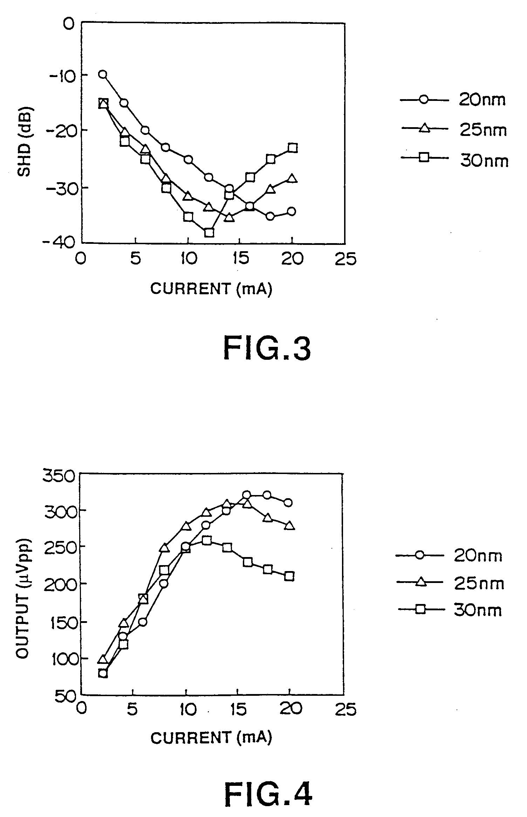

However, when the film thickness of the MR element 101 is varied in order to increase the head output, there is a problem that the optimum bias point would be shifted. That is, as shown in Fig. 3, it is conceivable that when the SHD (secondary higher harmonic distortion) is lower than or equal to -30dB, it could become the substantially optimum bias. However, when the film thickness of the MR element 101 is changed into 30 nm, 25 nm and 20 nm, it may be understood that the optimum bias points are shifted. The reason is that since a total amount of magnetisation is changed depending upon the film thickness of the MR element 101, if the film thickness becomes thinner, then an amount of magnetic flux required to rotate the magnetization would be lowered until the magnetization of the MR element 101 is brought into the optimum bias point.

Moreover, as indicated in Fig. 4, as previously explained, since there is a shift in the optimum bias point due to the change in the film thicknesses of the MR element 101, it could be understood that even when the film thickness of the MR element 101 is made thin, substantially no reproduced output is increased.

As a consequence, every time the film thickness of the MR element is varied, the structural design changes should be made in order that the bias field applied to the MR element 101 could become the optimum value. Such structural design changes may cause cumbersome work loads. Moreover, the shift in the optimum bias values caused by the fluctuation in the film thickness of the MR element 101 during manufacture would give adverse influences when the film thickness of this MR element 101 is made thinner. This may constitute one of major reasons to lower the yield.

Under such circumstances, it is nowadays rather difficult that the above-described MR head is made compact and the output reproduced from this MR head is increased. To solve this difficulty, various methods have been proposed.

## OBJECT AND SUMMARY OF THE INVENTION

The present invention has been made to solve the above-described problems, and therefore, has an object to provide a compact MR head operable at an optimum bias point, irrelevant to a film thickness of an MR element, and also capable of reproducing a high output signal therefrom.

To achieve the object of the present invention, there is provided such a magneto-resistance effect type magnetic head (MR head) in which a magnetic layer (MR element) having a magneto-resistance effect (i.e., resistivity thereof being changed in response to a magnetic field) is disposed, and a resistance change of this MR element is detectable as a reproduced output voltage.

An MR head, according to one aspect of the present invention, is featured that a first conductor is series-connected to a magneto-resistance effect element; a bias field applying portion of the first conductor is arranged on the magneto-resistance effect element; a second conductor is parallel-connected to the bias field applying portion; and a current is supplied to the first conductor; thereby applying a bias field to the magneto-resistance effect element.

It should be noted that the present invention is directed to a so-called "vertical type MR head" in which an MR element is employed in such a manner that a longitudinal direction of this MR element is perpendicular to a sliding direction of a magnetic recording medium, and also the above-explained MR head arranged by that a first conductor is series-connected to a rear end portion of this MR element.

At this time, it is suitable that the first conductor is arranged in the direction perpendicular to the hard magnetization axis of the MR element.

In this case, the first conductor and the second conductor may be fabricated in an integral form. Alternatively, the first and second conductors may be employed as separate members, and the second conductor may be electrically connected to the fabricated first conductor. In this case, since the shift in bias efficiencies caused by fluctuations in the film thickness of the latter-mentioned MR head element and in the magnetic characteristic thereof during manufacture can be corrected, this MR head with better characteristics can be manufactured, as compared with the first-mentioned MR head.

In the MR head according to the present invention, the first conductor in which the bias field applying portion is arranged on the MR element is connected in series to this MR element, and also the second conductor is parallel-connected to the bias field applying portion. Comparing with the sense current flowing from the first conductor to the MR element, the bias current flowing through the portion of the first conductor arranged on the MR element is equal to such a current value obtained by subtracting the current value proportional to the electric resistance value of the second conductor from the above-described sense current. As a consequence, the electric resistance value of the second conductor is adjusted and formed in such a manner that the optimum bias value can be obtained for this MR element, depending upon the film thickness of the MR element, namely the film thickness, the surface area and the like of the second conductor are controlled during the manufacturing operation. Thus, the optimum bias field in the employed current value region may be applied to the MR element, irrelevant to the film thickness of the MR element.

Concretely speaking, assuming now that the sense current is "Is," the bias current is "Ib" the electric resistance value of the first conductor is "R1," and the electric resistance value of the second conductor is "R2," the bias current "Ib" is defined as follows:

$$Ib = Is \times R2/(R1 + R2)$$

Accordingly, the second conductor may be fabricated in order that the electric resistance value R2 of the second conductor is defined by the below-mentioned equation:

$$R2 = Rs \times Ib/(Is - Ib)$$

BRIEF DESCRIPTION OF THE DRAWINGS

For a better understanding of the present invention, reference is made of the detailed description to be read in conjunction with the accompanying drawings, in which:

Fig. 1 is a characteristic diagram for representing the MR characteristic of the MR head;
Fig. 2 is a plan view for schematically showing the MR element, the first conductor, and the second conductor, corresponding to the structural elements of the conventional MR head;
Fig. 3 is a characteristic diagram for showing relationships between the currents supplied to the MR element and SHDs (secondary higher harmonic distortions) with respect to the respective film thicknesses;
Fig. 4 is a characteristic diagram for indicating relationships between the currents supplied to the MR element and the outputs with respect to the respective film thicknesses;
Fig. 5 is a sectional view for schematically representing an MR head according to a preferred embodiment of the present invention;
Fig. 6 is a plan view for schematically indicating an MR element, a first conductor, and a second conductor, corresponding to a structural element of the MR head according to this embodiment of the present invention;
Fig. 7 is an equivalent circuit diagram of the MR element, the first conductor, and the second conductor, shown in Fig. 6; and
Fig. 8 is a plan view for schematically showing an MR element, a first conductor, and a second conductor, corresponding to a constructive element of another MR head according to a modification of the present invention.

DETAILED DESCRIPTION OF THE PREFERRED EMBODIMENT

Referring now to drawings, an MR head (magneto-resistive effect type magnetic head) according to a preferred embodiment of the present invention will be described.

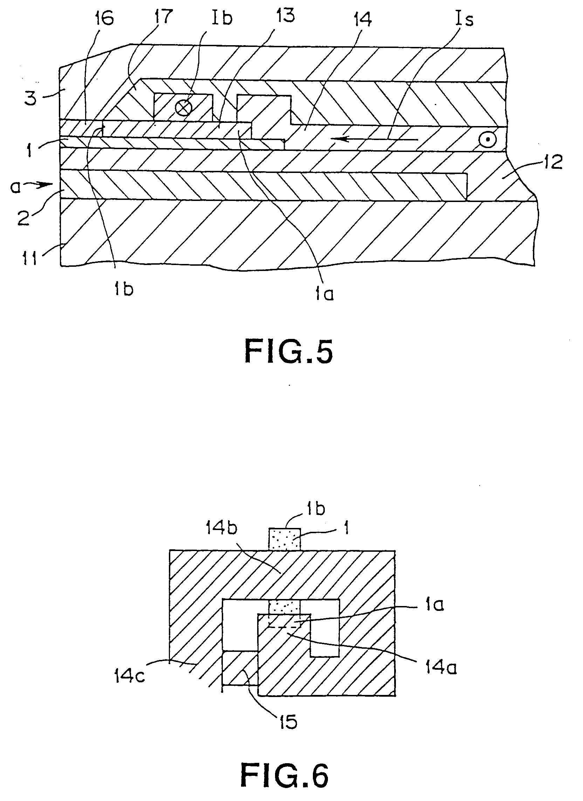

As illustrated in Fig. 5, the MR head according to this embodiment is constructed as a so-called "longitudinal type thin-film magnetic head," namely has such a structure that an MR element 1 is sandwiched between a lower portion magnetic pole 2 and an upper portion magnetic pole 3, and the MR element 1 owns a magnetic sensitive portion fabricated by that a hard magnetization axis direction (i.e., longitudinal direction) is perpendicular to a sliding surface "a" for a magnetic recording medium.

It should be understood that the above-described MR head owns an easy magnetization axis parallel to the magnetic recording medium sliding surface "a." An easy magnetization axis implies a direction along which magnetic anisotropic energy becomes minimum and thus a spontaneous magnetization is directed to a stable condition. A hard magnetization axis implies a direction along which magnetic anisotropic energy becomes maximum.

Concretely speaking, a film of the lower magnetic pole 2 equal to a shield magnetic film made of Ni-Fe and the like is formed on a non-magnetic substrate 11 made of $Al_2O_3$-TiC and the like. An insulating layer 12 made of silicon oxide ($SiO_2$) and the like is stacked on the surface of this lower magnetic pole 2. The above-explained MR element 1 is fabricated on this insulating layer 12, and further another insulating layer 13 made of $SiO_2$ and the like is stacked thereon except for a front end portion 1b and a rear end portion 1a over the MR element 1.

Then, a film of a first conductor 14 made of a conductive material is formed over the insulating layer 13 and is electrically connected in series with the rear end portion 1a of the MR element 1. Furthermore, a film of a front end electrode 16 made of a conductive material is fabricated on the front end portion 1b of the MR element 1.

As represented in Fig. 6, this first conductor 14 is fabricated in a film shape such that the film of the first conductor having a substantially spiral shape is bent. As described above, one end portion 14a of this first conductor 14 is series-connected to the rear end portion 1a of the MR element 1, and also the bend portion is turned three times to constitute a bias field applying portion 14b in such a manner that it is located perpendicular to the hard magnetization axis of the MR element 1 on the insulating layer 13. Further, the first conductor 14 is bent one time, and the other end portion thereof constitutes a sense current supplying portion 14c.

In addition, a second conductor 15 made of a conductor material is parallel-connected with the bias field applying portion 14b. In this embodiment, the second conductor 15 is employed as a bypass line for connecting a neighbor portion of one end portion 14a of this first conductor 14 and a neighbor portion of the sense current supplying portion 14c. In this case, the first conductor 14 and the second conductor 15 are formed an integral film form.

Subsequently, films of insulating layers 17 made of $SiO_2$ and the like are formed in-between the first conductor 14, the second conductor 15 and the insulating layer 13, and the film of the upper magnetic pole 3 made of such a magnetic film as Ni-Fe and the like is formed on the insulating layer 17, resulting in the fabrication of the above-described MR head.

In this case, in the above-mentioned MR head, the MR element 1 is arranged in such a manner that a longitudinal direction thereof is positioned perpendicular to a surface opposite to a magnetic recording medium, namely a sliding surface "a" of the magnetic recording medium, and then one end surface of this MR element 1 is exposed from the sliding surface "a" of this magnetic recording medium. As explained above, the above-described front end electrode 16 and first conductor 14 (and second conductor 15) are formed on a front end portion 1b of this MR element 1 on the side of the -magnetic recording medium sliding surface "a," and also a rear end portion 1a separated from this front end portion 1b by a predetermined distance. A region defined between the front end electrode 16 and one end portion 14a of the first conductor 14 plays a role of the magneto-resistance effect.

At this time, the sense current Is having a predetermined value is supplied from the sense current supplying portion 14c of the first electrode 14, so that the bias current Ib is supplied to the bias field applying portion 14b. Thus, the bias field is applied to the MR element 1 and the sense current Is is supplied from one end portion 1a to the MR element 1. In other words, the bias current Ib flowing through the bias field applying portion 14b becomes such a value obtained by subtracting a current value proportional to an electric resistance value of the second conductor 15 from the sense current Is.

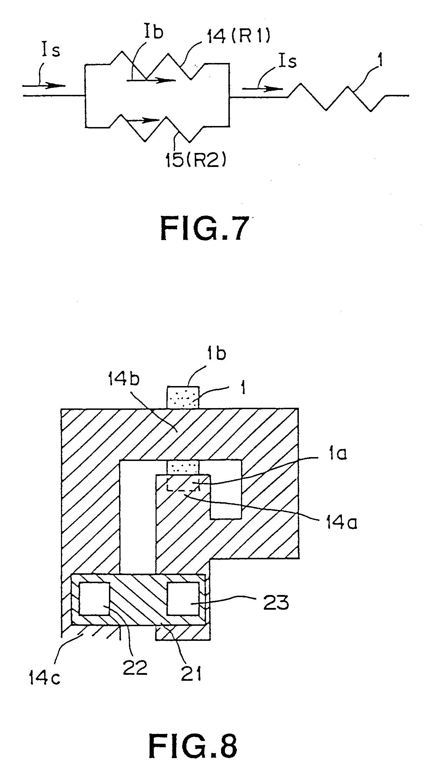

Concretely speaking, as indicated in Fig. 7 (namely, an equivalent circuit diagram of the MR element 1, the first conductor 14, and the second conductor 15 shown in Fig. 6), assuming now that the sense current is Is, the bias current is Ib, the electric resistance value of the first conductor 14 is R1, and the electric resistance value of the second conductor 15 is R2, this bias current Ib is given by the following equation (1):

$$Ib = Is \times R2/(R1 + R2) \qquad (1)$$

Accordingly, the electric resistance value R2 of the second conductor 15 is adjusted, or controlled to be formed so as to satisfy the below-mentioned equation (2) in order that it becomes an optimum bias value for this MR element 1, depending upon the film thickness of the MR element 1:

$$R2 = R1 \times Ib/(Is - Ib) \qquad (2)$$

Namely, the film thickness and surface area of the second conductor 15 are controlled. As a consequence, an optimum bias field may be applied to the MR element 1 in the employed current value region, irrelevant to the film thickness of the MR element 1.

As described above, in accordance with the MR head of this preferred embodiment, this MR head can be used at the optimum bias point, irrelevant to the film thickness of the MR element 1. Moreover, since the film thickness of the MR element 1 is made thin and both of the bias conductor and the rear end electrode are commonly used by the first conductor 14, a compact MR head can be produced with a high output signal.

Now, a description will be made of a modification about the above-explained MR head. This modified MR head owns a similar structure as that of the MR head according to this embodiment, but has a different point as to the structure of the above-described second conductor. It should be noted that the same reference numerals used in the previously explained MR head are employed as those for denoting the corresponding members.

That is, as represented in Fig. 8, in the MR head of this modification, a second conductor 21 is employed independent from the first conductor 14, and the second conductor 21 is electrically connected onto connecting portions 22 and 23 of the first conductor 14 formed in the film shape.

In the MR head according to this modification, similar to the MR head of the above-described embodiment, an electric resistance value Rb of the second conductor 21 is controlled to be fabricated in accordance with equation (2), namely, the film thickness and surface area of the second conductor 21 are controlled. Thus, an optimum bias field is applied to the MR element 1 in the current value region under use, irrelevant to the film thickness of the MR element 1, so that this MR head can be operated at the optimum bias point, irrelevant to the film thickness of the MR element 1. Moreover, since the shift in bias efficiencies caused by fluctuations in the film thickness of the MR head element and in the magnetic characteristic thereof during manufacture can be corrected, this MR head with better characteristics can be manufactured, as compared with the first-mentioned MR head.

It should be understood that the present invention is not limited to the above-explained embodiments, but may be modified or changed. For example, in the above-explained embodiment, the MR head is exemplarily shown which has been constructed by employing the upper magnetic pole 3 and the lower magnetic pole 2 on the upper and lower portions of the multilayer film element 1. Alternatively, the inventive idea of the present invention may be applied to the so-called "non-shield type MR head" in which neither the upper magnetic pole 3, nor the lower magnetic pole 2 are employed.

As previously explained, the MR head according to the present invention can be used at the optimum bias point, irrelevant to the film thickness of the MR element. Moreover, this MR head can be made compact and also can produce the high head output.

**Claims**

1. A magneto-resistance effect type magnetic head wherein:
   a first conductor is series-connected to a magneto-resistance effect element;
   a bias field applying portion of said first conductor is arranged on the magneto-resistance effect element;
   a second conductor is parallel-connected to the bias field applying portion; and
   a current is supplied to said first conductor, thereby applying a bias field to said magneto-resistance effect element.

2. A magneto-resistance effect type magnetic head as claimed in claim 1 wherein:
   said first conductor is arranged perpendicular to a hard magnetization axis direction of the magneto-resistance effect element.

3. A magneto-resistance effect type magnetic head as claimed in claim 1 wherein:
   said first conductor and said second conductor are made in an integral form.

4. A magneto-resistance effect type magnetic head as claimed in claim 1 wherein:
   said first conductor and said second conductor are made from separate members, and said second conductor is electrically connected to the formed first conductor.

5. A magneto-resistance effect type magnetic head as claimed in claim 1 wherein:
   said magneto-resistance effect element is arranged in such a manner that a longitudinal direction thereof is perpendicular to a sliding direction of a magnetic recording medium; and
   a first conductor is series-connected to a rear end portion of said magneto-resistance effect element.

FIG.1

FIG.2
(PRIOR ART)

**FIG.3**

**FIG.4**

8

# FIG.5

# FIG.6

FIG.7

FIG.8